# EUROPEAN PATENT APPLICATION

(11) **EP 4 718 688 A1**
(43) Date of publication of application: **01.04.2026**
(21) Application number: 25194423.7
(22) Date of filing: 06.08.2025
(51) Int. Cl.: H02K 5/22, H02K 7/14, B63H 20/00, B63H 20/12, B63H 21/17

(54) **OUTBOARD MOTOR**

(30) Priority: 26.09.2024 JP 2024167430
(71) Applicant: Suzuki Motor Corporation, Shizuoka 432-8611 (JP)
(72) Inventor: MIYASHITA, Yasushi, Hamamatsu-shi, 432-8611 (JP)
(74) Representative: Haseltine Lake Kempner LLP

(57) **Abstract**

An outboard motor for propelling a ship. The outboard motor includes a propulsion device including a propeller and a drive motor configured to rotate the propeller, a shaft portion having a tubular shape and extending in an upper-lower direction, the propulsion device being fixed to a lower end side portion of the shaft portion, an attachment mechanism configured to attach the shaft portion to the ship so as to be rotated about an axis of the shaft portion, a steering device including a turning motor, configured to rotate the shaft portion by driving of the turning motor, and configured to change an orientation of the propulsion device in a left-right direction.

## Description

### TECHNICAL FIELD

The present disclosure relates to an outboard motor for propelling a ship.

### BACKGROUND ART

In general, an outboard motor includes a propulsion device that generates a propulsion force of a ship and an attachment mechanism that attaches the propulsion device to the ship. The propulsion device includes a propeller and a power source that rotates the propeller. The attachment mechanism includes a clamp bracket that fixes the propulsion device to a transom of the ship, and a swivel bracket that allows the propulsion device to rotate in a left-right direction with respect to the ship.

The swivel bracket is coupled to the clamp bracket. When the clamp bracket is fixed to the ship, the swivel bracket is supported by the ship via the clamp bracket. A shaft extending in an upper-lower direction is rotatably supported by the swivel bracket. The shaft is generally called a pilot shaft or a steering shaft. The propulsion device is coupled to the shaft, and thus the propulsion device can rotate in the left-right direction with respect to the ship. By rotating the propulsion device in the left-right direction, an orientation of the propeller can be changed in the left-right direction, and the ship can be turned.

A cable is connected to the propulsion device. For example, in order to supply electric power to the propulsion device, a battery provided in the ship and the propulsion device may be connected by an electric cable. In order to transmit a control signal to the propulsion device, a control device provided in the ship and the propulsion device may be connected by an electric cable. JP2007-153240A describes an outboard motor in which a battery provided in a ship and an outboard motor body (a propulsion device) are connected by an electric signal line (an electric cable).

In the outboard motor of the related art, the cable connected to the propulsion device is largely displaced in conjunction with the propulsion device when the propulsion device rotates in the left-right direction with respect to the ship.

For example, in an outboard motor described in JP2007-153240A, an extension pipe (16) is rotatably supported by a ship via a stem bracket (66) as illustrated in FIG. 1 of the same patent literature. An outboard motor body (12) is connected to a lower end portion of the extension pipe (16). A bar handle (18) is connected to an upper end portion of the extension pipe (16). By operating the bar handle (18) in a left-right direction, a ship operator can rotate the extension pipe (16) and the outboard motor body (12) integrally in the left-right direction, thereby turning the ship. The outboard motor further includes an electric signal line (52) that connects a battery (50) provided in the ship and the outboard motor body (12). One end of the electric signal line (52) is connected to the battery (50), and the other end of the electric signal line (52) is connected to the outboard motor body (12). The other side portion of the electric signal line (52) is disposed in the extension pipe (16). One side portion of the electric signal line (52) passes through a hole formed in a peripheral wall of an upper end side portion of the extension pipe (16), and is drawn out of the extension pipe (16) from the extension pipe (16). Since the one side portion of the electric signal line (52) is drawn out of the extension pipe (16) through the hole formed in the peripheral wall of the upper end side portion of the extension pipe (16), the one side portion of the electric signal line (52) is largely displaced in the left-right direction in conjunction with the extension pipe (16) and the outboard motor body (12) when the extension pipe (16) and the outboard motor body (12) are rotated by the ship operator operating the bar handle (18) in the left-right direction. The reference numerals in parentheses in the above description are the reference numerals in JP2007-153240A.

When the cable connected to the propulsion device is largely displaced, the cable may hit a hull or an object provided on the ship, and the hull, the object, or the cable may be damaged.

### SUMMARY OF INVENTION

Aspect of non-limiting embodiments of the present disclosure relates to provide an outboard motor capable of preventing a cable connected to a propulsion device from being displaced in conjunction with the propulsion device.

Aspects of certain non-limiting embodiments of the present disclosure address the features discussed above and/or other features not described above. However, aspects of the non-limiting embodiments are not required to address the above features, and aspects of the non-limiting embodiments of the present disclosure may not address features described above.

According to an aspect of the present disclosure, there is provided an outboard motor for propelling a ship, the outboard motor including:
a propulsion device including a propeller and a drive motor configured to rotate the propeller;
a shaft portion having a tubular shape and extending in an upper-lower direction, the propulsion device being fixed to a lower end side portion of the shaft portion;
an attachment mechanism configured to attach the shaft portion to the ship so as to be rotated about an axis of the shaft portion;
a steering device including a turning motor, configured to rotate the shaft portion by driving of the turning motor, and configured to change an orientation of the propulsion device in a left-right direction;
a cable passing through inside the shaft portion and configured to transmit electric power or an electric signal for driving the drive motor to the propulsion device, a lower end portion of the cable being fixed to the propulsion device, an upper portion of the cable being drawn out of the shaft portion from an opening portion at an upper side of the shaft portion; and
a cable support portion configured to support a part of a portion of the cable drawn out of the shaft portion from the opening portion at the upper side of the shaft portion, a portion of the cable positioned above the opening portion at the upper side of the shaft portion, or a portion of the cable positioned inside the opening portion at the upper side of the shaft portion so as not to be rotated in the left-right direction with respect to the attachment mechanism.

### BRIEF DESCRIPTION OF DRAWINGS

Exemplary embodiment(s) of the present invention will be described in detail based on the following figures, wherein:
FIG. 1 is an external view illustrating an outboard motor according to a first embodiment of the present disclosure;
FIG. 2 is a sectional view of the outboard motor according to the first embodiment of the present disclosure cut to the left and right with an axis of a shaft portion as a boundary;
FIG. 3 is a sectional view illustrating a portion of the outboard motor illustrated in FIG. 2 that rotates in a left-right direction with respect to the ship;
FIG. 4 is an enlarged sectional view illustrating an upper portion of the outboard motor illustrated in FIG. 2;
FIG. 5 is a sectional view illustrating the outboard motor taken along a cutting line V-V in FIG. 4 as viewed from above;
FIG. 6 is a sectional view illustrating the outboard motor taken along a cutting line VI-VI in FIG. 4 as viewed from above;
FIG. 7A is a sectional view illustrating the upper portion of the outboard motor taken along a cutting line VIIa-VIIa in FIG. 6 as viewed from the front;
FIG. 7B is an enlarged sectional view of a terminal connection member and the like in FIG. 7A;
FIG. 8A is a perspective view illustrating a terminal connection member in the outboard motor according to the first embodiment of the present disclosure;
FIG. 8B is an explanatory view illustrating an upper bush of the outboard motor;
FIG. 8C is an explanatory view illustrating a lower bush of the outboard motor;
FIG. 9A is a sectional view illustrating an upper portion of an outboard motor according to a second embodiment of the present disclosure;
FIG. 9B is an explanatory view illustrating the outboard motor with a top plate of an upper case is removed, as viewed from above; and
FIG. 10 is a sectional view illustrating an upper portion of an outboard motor according to another embodiment of the present disclosure.

### DESCRIPTION OF EMBODIMENTS

An outboard motor according to an embodiment of the present disclosure includes a propulsion device, a shaft portion, an attachment mechanism, a steering device, a cable, and a cable support portion. In the outboard motor according to the present embodiment, the propulsion device is a device that generates a propulsion force of a ship. The propulsion device includes a propeller and a drive motor that rotates the propeller.

The shaft portion is formed in a tubular shape and extends in an upper-lower direction. The propulsion device is fixed to a lower end side portion of the shaft portion.

The attachment mechanism is a mechanism that attaches the shaft portion to the ship so as to be rotatable about an axis of the shaft portion. Since the shaft portion is rotatably attached to the ship by the attachment mechanism, the propulsion device fixed to the shaft portion is rotatably supported by the ship.

The steering device is a device that rotates the shaft portion and changes an orientation of the propulsion device in the left-right direction. The steering device includes a turning motor and rotates the shaft portion by driving of the turning motor. When the shaft portion rotates, the propulsion device fixed to the shaft portion rotates in the left-right direction integrally with the shaft portion, the orientation of the propulsion device in the left-right direction changes, and an orientation of the propeller in the left-right direction changes. The ship is turned by changing the orientation of the propulsion device in the left-right direction by the steering device.

The cable is an electric cable that transmits electric power or an electric signal for driving the drive motor to the propulsion device. A lower portion of the cable passes through the shaft portion. A lower end portion of the cable is fixed to the propulsion device. An upper portion of the cable is drawn out of the shaft portion from an opening portion at an upper side of the shaft portion. An end portion of the cable on a side where the cable is drawn out of the shaft portion from the opening portion at the upper side of the shaft portion is connected to, for example, a battery provided in the ship or a control device provided in the ship.

The cable support portion is a member or a mechanism that supports a part of a portion of the cable drawn out of the shaft portion from the opening portion at the upper side of the shaft portion, a portion of the cable positioned above the opening portion at the upper side of the shaft portion, or a portion of the cable positioned inside the opening portion at the upper side of the shaft portion such that these portions are not rotatable in the left-right direction with respect to the attachment mechanism.

The outboard motor according to the present embodiment includes the following three aspects.

Aspect (1) A part of the portion of the cable drawn out of the shaft portion from the opening portion at the upper side of the shaft portion is supported by the cable support portion so as not to be rotatable in the left-right direction with respect to the attachment mechanism.

Aspect (2) The portion of the cable positioned above the opening portion at the upper side of the shaft portion is supported by the cable support portion so as not to be rotatable in the left-right direction with respect to the attachment mechanism.

Aspect (3) The portion of the cable positioned inside the opening portion at the upper side of the shaft portion is supported by the cable support portion so as not to be rotatable in the left-right direction with respect to the attachment mechanism.

Aspect (2) is a subordinate aspect of Aspect (1) and is included in Aspect (1).

In the outboard motor according to the present embodiment, in the case where the part of the portion of the cable drawn out of the shaft portion from the opening portion at the upper side of the shaft portion, except for the portion positioned above the opening portion at the upper side of the shaft portion, is supported by the cable support portion so as not to be rotatable in the left-right direction with respect to the attachment mechanism (this is an aspect obtained by excluding Aspect (2) from Aspect (1)), the outboard motor according to the present embodiment provides the following effects.

The lower portion of the cable passes through inside the shaft portion and extends in the upper-lower direction. The lower end portion of the cable is fixed to the propulsion device. The upper portion of the cable is drawn out of the shaft portion from the opening portion at the upper side of the shaft portion. In addition, the part of the portion of the cable drawn out of the shaft portion from the opening portion at the upper side of the shaft portion, except for the portion positioned above the opening portion at the upper side of the shaft portion is supported by the cable support portion so as not to be rotatable in the left-right direction with respect to the attachment mechanism. In such a configuration, when the shaft portion and the propulsion device are rotated in the left-right direction by the steering device, a portion of the cable passing through the shaft portion is displaced so as to be twisted substantially about the axis of the shaft portion. At the same time, a portion of the cable from a portion supported by the cable support portion to a portion positioned in the opening portion at the upper side of the shaft portion is displaced in the left-right direction. However, even when the shaft portion and the propulsion device are rotated in the left-right direction by the steering device, a portion of the cable from an end portion connected to a battery, a control device, or the like provided in the ship to a portion supported by the cable support portion is not displaced.

As described above, in the outboard motor according to the present embodiment, in the case where the part of the portion of the cable drawn out of the shaft portion from the opening portion at the upper side of the shaft portion, except for the portion positioned above the opening portion at the upper side of the shaft portion, is supported by the cable support portion so as not to be rotatable in the left-right direction with respect to the attachment mechanism, the cable connected to the propulsion device can be prevented from being displaced in conjunction with the propulsion device when the propulsion device rotates in the left-right direction with respect to the ship. Specifically, when the propulsion device rotates in the left-right direction with respect to the ship, a portion of the cable connected to the propulsion device from an end portion connected to the battery, the control device, or the like provided in the ship to a portion supported by the cable support portion is prevented from being displaced in conjunction with the propulsion device. Therefore, when the propulsion device rotates in the left-right direction with respect to the ship, the cable connected to the propulsion device is prevented from hitting a hull or an object provided on the ship.

In this aspect, since the lower portion of the cable passes through the shaft portion and the upper portion of the cable is drawn out of the shaft portion from the opening portion at the upper side of the shaft portion, when the shaft portion and the propulsion device rotate in the left-right direction with respect to the ship, the lower portion of the cable is displaced so as to be twisted substantially about the axis of the shaft portion. As a result, it is possible to reduce an amount of displacement of the portion of the cable from the portion supported by the cable support portion to the portion positioned in the opening portion at the upper side of the shaft portion. Therefore, when the propulsion device rotates in the left-right direction with respect to the ship and the portion of the cable from the portion supported by the cable support portion to the portion positioned in the opening portion at the upper side of the shaft portion is displaced, a force applied from the cable to the cable support portion can be reduced. Therefore, even if a strength with which the cable is supported by the cable support portion is reduced, the cable can be sufficiently supported by the cable support portion, and thus a structure of the cable support portion can be simplified.

In the outboard motor according to the present embodiment, in the case where the portion of the cable positioned above the opening portion at the upper side of the shaft portion is supported by the cable support portion so as not to be rotatable in the left-right direction with respect to the attachment mechanism, the outboard motor according to the present embodiment provides the following effects.

The lower portion of the cable passes through the shaft portion and extends in the upper-lower direction. The lower end portion of the cable is fixed to the propulsion device. The upper portion of the cable is drawn out of the shaft portion from the opening portion at the upper side of the shaft portion. Further, the portion of the cable positioned above the opening portion at the upper side of the shaft portion is supported by the cable support portion so as not to be rotatable in the left-right direction with respect to the attachment mechanism. In such a configuration, when the shaft portion and the propulsion device are rotated in the left-right direction by the steering device, the portion of the cable from the portion positioned above the opening portion at the upper side of the shaft portion to the lower end portion is displaced so as to be twisted substantially about the axis of the shaft portion. However, even when the shaft portion and the propulsion device are rotated in the left-right direction by the steering device, the portion of the cable from the end portion connected to the battery, the control device, or the like provided in the ship to the portion positioned above the opening portion at the upper side of the shaft portion is not displaced.

As described above, in the outboard motor according to the present embodiment, in the case where the portion of the cable positioned above the opening portion at the upper side of the shaft portion is supported by the cable support portion so as not to be rotatable in the left-right direction with respect to the attachment mechanism, the cable connected to the propulsion device can be prevented from being displaced in conjunction with the propulsion device when the propulsion device rotates in the left-right direction with respect to the ship. Specifically, when the propulsion device rotates in the left-right direction with respect to the ship, the portion of the cable connected to the propulsion device from the end portion connected to the battery, the control device, or the like provided in the ship to the portion positioned above the opening portion at the upper side of the shaft portion can be prevented from being displaced in conjunction with the propulsion device. Therefore, when the propulsion device rotates in the left-right direction with respect to the ship, the cable connected to the propulsion device can be prevented from hitting a hull or an object provided on the ship.

In this aspect, when the propulsion device rotates in the left-right direction, the portion of the cable that is displaced is a portion from the portion positioned above the opening portion at the upper side of the shaft portion to the lower end portion. When the propulsion device rotates in the left-right direction, this portion is displaced so as to be twisted substantially about the axis of the shaft portion. Therefore, it is sufficient to secure a space above the opening portion at the upper side of the shaft portion and a space in the shaft portion as a space for allowing the displacement of the cable accompanying the rotation of the propulsion device. Therefore, the space for allowing the displacement of the cable accompanying the rotation of the propulsion device can be reduced. Accordingly, a compact outboard motor is achieved.

In the outboard motor according to the present embodiment, in the case where the portion of the cable positioned inside the opening portion at the upper side of the shaft portion is supported by the cable support portion so as not to be rotatable in the left-right direction with respect to the attachment mechanism, the outboard motor according to the present embodiment provides the following effects.

The lower portion of the cable passes through the shaft portion and extends in the upper-lower direction. The lower end portion of the cable is fixed to the propulsion device. The upper portion of the cable is drawn out of the shaft portion from the opening portion at the upper side of the shaft portion. Further, the portion of the cable positioned inside the opening portion at the upper side of the shaft portion is supported by the cable support portion so as not to be rotatable in the left-right direction with respect to the attachment mechanism. In such a configuration, when the shaft portion and the propulsion device are rotated in the left-right direction by the steering device, the portion of the cable from the portion positioned inside the opening portion at the upper side of the shaft portion to the lower end portion is displaced so as to be twisted substantially about the axis of the shaft portion. However, even when the shaft portion and the propulsion device are rotated in the left-right direction by the steering device, the portion of the cable from the end portion connected to the battery, the control device, or the like provided in the ship to the portion positioned inside the opening portion at the upper side of the shaft portion is not displaced.

As described above, in the outboard motor according to the present embodiment, in the case where the portion of the cable positioned inside the opening portion at the upper side of the shaft portion is supported by the cable support portion so as not to be rotatable in the left-right direction with respect to the attachment mechanism, the cable connected to the propulsion device can be prevented from being displaced in conjunction with the propulsion device when the propulsion device rotates in the left-right direction with respect to the ship. Specifically, when the propulsion device rotates in the left-right direction with respect to the ship, the portion of the cable connected to the propulsion device from the end portion connected to the battery, the control device, or the like provided in the ship to the portion positioned inside the opening portion at the upper side of the shaft portion can be prevented from being displaced in conjunction with the propulsion device. Therefore, when the propulsion device rotates in the left-right direction with respect to the ship, the cable connected to the propulsion device can be prevented from hitting a hull or an object provided on the ship.

In this aspect, when the propulsion device rotates in the left-right direction, the portion of the cable that is displaced is a portion from the portion positioned inside the opening portion at the upper side of the shaft portion to the lower end portion. When the propulsion device rotates in the left-right direction, this portion is displaced so as to be twisted substantially about the axis of the shaft portion. Therefore, it is sufficient to secure the space in the shaft portion as the space for allowing the displacement of the cable accompanying the rotation of the propulsion device. Therefore, the space for allowing the displacement of the cable accompanying the rotation of the propulsion device can be reduced. Accordingly, the compact outboard motor is achieved.

### First Embodiment

Hereinafter, some embodiments of the present disclosure will be described with reference to the drawings. In the description of the embodiment, when describing directions of upper (Ud), lower (Dd), front (Fd), rear (Bd), left (Ld), and right (Rd), arrows drawn at the lower left of each figure are followed for the sake of convenience of description.

### Basic Configuration of Outboard Motor

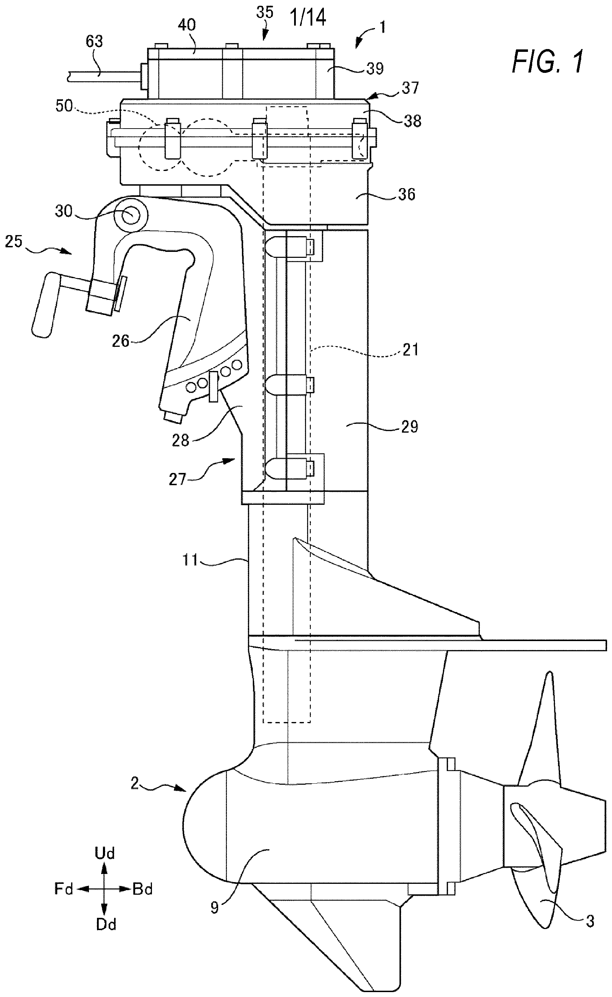

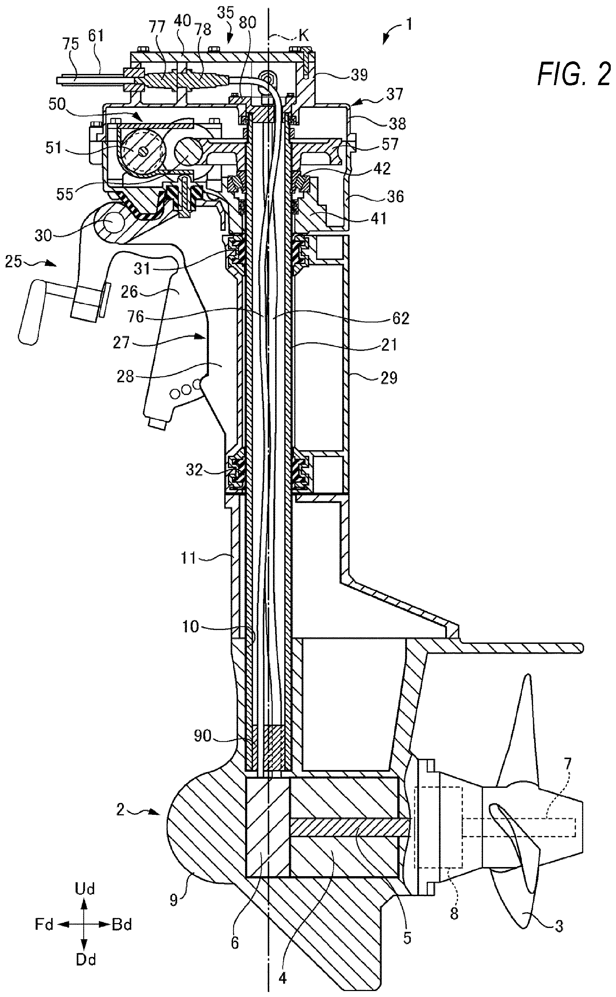

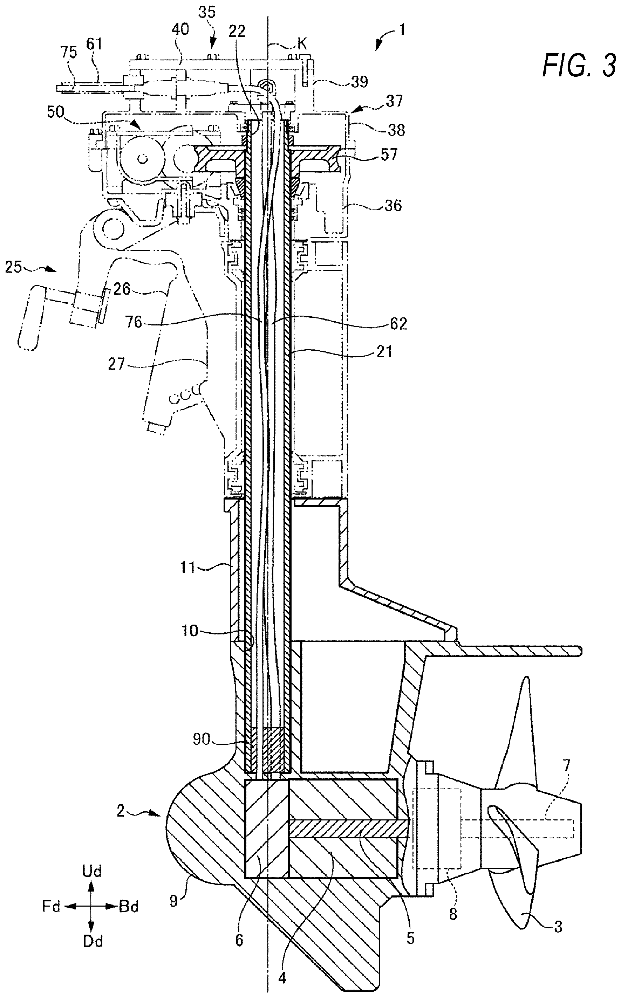

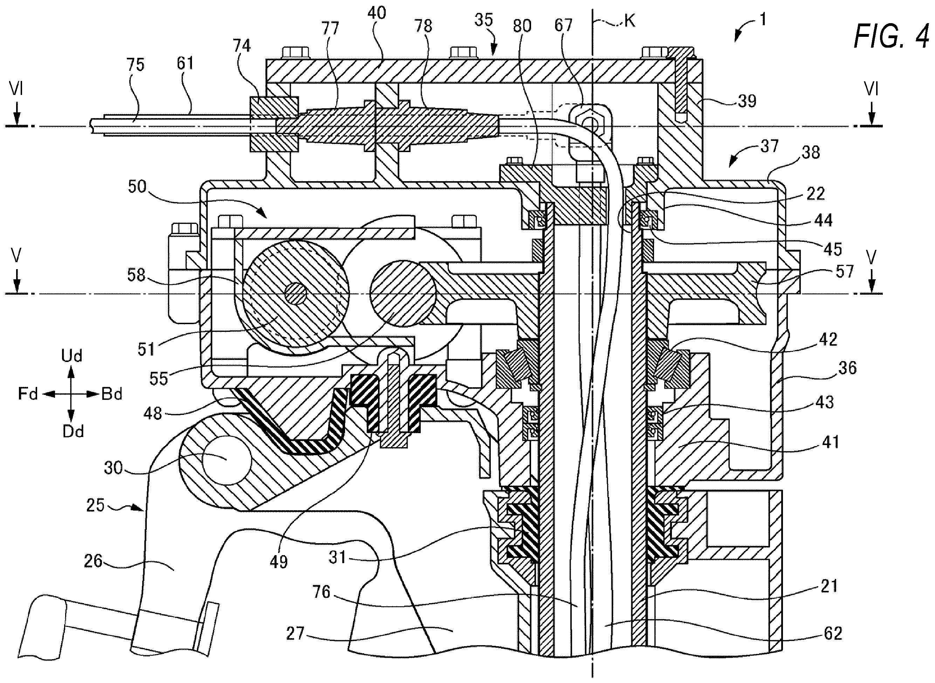

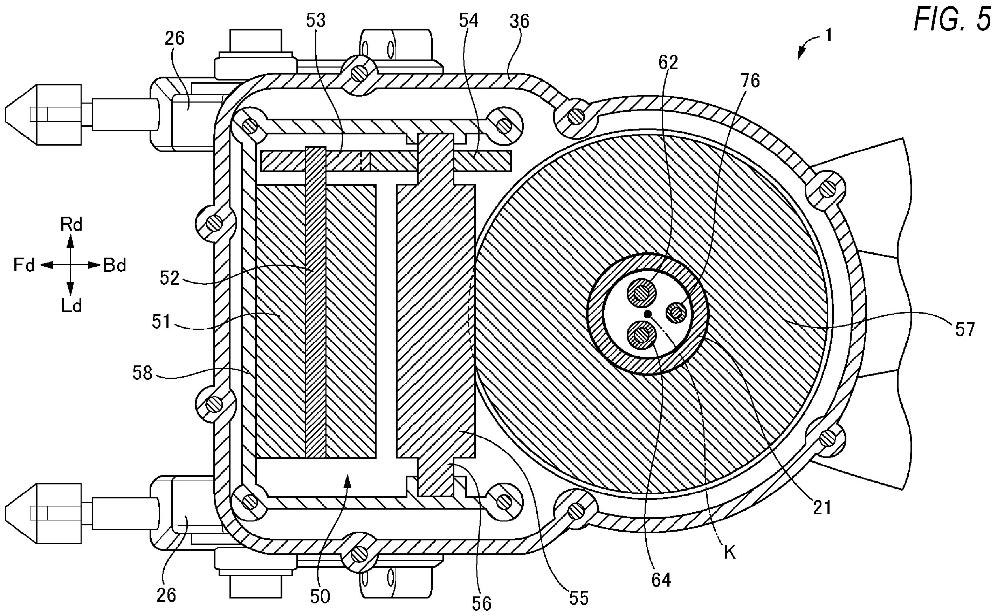

FIG. 1 illustrates an outboard motor 1 according to a first embodiment of the present disclosure as viewed from the left. FIG. 2 illustrates a cross section of the outboard motor 1 cut to the left and right with an axis K of a shaft portion 21 as a boundary. FIG. 3 illustrates a portion of the outboard motor 1 that rotates in a left-right direction with respect to a ship. FIG. 4 illustrates an enlarged view of an upper portion of the outboard motor 1 in FIG. 2. FIG. 5 illustrates a cross section of the outboard motor 1 taken along a cutting line V-V in FIG. 4 as viewed from above.

The outboard motor 1 is a device for propelling a ship and is attached to the ship. As illustrated in FIG. 1, the outboard motor 1 includes a propulsion device 2 configured to generate a propulsion force of a ship, a shaft portion 21 that extends upward from the propulsion device 2, an attachment mechanism 25 configured to attach the propulsion device 2 and the shaft portion 21 to the ship, an upper case 35 configured to cover an upper end side portion of the shaft portion 21, and a steering device 50 for steering the ship.

The propulsion device 2 is disposed in a lower portion of the outboard motor 1. In a state in which the outboard motor 1 is attached to the ship, the propulsion device 2 is positioned below a water surface. As illustrated in FIG. 2, the propulsion device 2 includes a propeller 3, a drive motor 4 that is a motor (an electric motor) configured to generate power for rotating the propeller 3, an inverter 6 configured to control driving of the drive motor 4, a propeller shaft 7 configured to support the propeller 3, a speed reducer 8 configured to reduce rotation of an output shaft 5 of the drive motor 4 and transmit the rotation to the propeller shaft 7, and a lower case 9 configured to accommodate the drive motor 4, the inverter 6, the speed reducer 8, and the like. The inverter 6 is disposed at a front portion in the lower case 9. The inverter 6 is positioned below the shaft portion 21. The drive motor 4 is disposed behind the inverter 6, and the speed reducer 8 is disposed behind the drive motor 4. The output shaft 5 of the drive motor 4 extends in a front-rear direction, and a rear end side portion of the output shaft 5 is connected to the speed reducer 8. The propeller shaft 7 extends in the front-rear direction, a front end side portion of the propeller shaft 7 is connected to the speed reducer 8, and the propeller 3 is attached to a rear portion of the propeller shaft 7. A middle case 11 is provided above the lower case 9. The middle case 11 is fixed to the lower case 9.

As illustrated in FIG. 3, the shaft portion 21 is formed in a cylindrical shape and extends in the upper-lower direction. The propulsion device 2 is connected to a lower end side portion of the shaft portion 21. The propulsion device 2 is fixed to the shaft portion 21 and is not rotatable with respect to the shaft portion 21. Specifically, a lower portion of the shaft portion 21 passes through inside the middle case 11. A lower end side portion of the shaft portion 21 is inserted into an attachment hole 10 provided in the lower case 9 and fixed to the lower case 9.

The attachment mechanism 25 is a mechanism configured to attach the shaft portion 21 to the ship such that the shaft portion 21 is configured to be rotated about the axis K of the shaft portion 21. Since the shaft portion 21 is rotatably attached to the ship by the attachment mechanism 25, the propulsion device 2 fixed to the shaft portion 21 is rotatably supported by the ship. As illustrated in FIG. 1, the attachment mechanism 25 includes a clamp bracket 26 that attaches and fixes the shaft portion 21 to a transom of the ship, a swivel bracket 27 that supports the shaft portion 21 to be rotatable about the axis K of the shaft portion 21 with respect to the ship, and a tilt shaft 30 that couples the clamp bracket 26 and the swivel bracket 27 to each other. The swivel bracket 27 includes a front bracket portion 28 and a rear bracket portion 29. The swivel bracket 27 is formed by coupling the front bracket portion 28 and the rear bracket portion 29 to each other by a coupling member such as a bolt. As illustrated in FIG. 2, the shaft portion 21 is sandwiched between the front bracket portion 28 and the rear bracket portion 29.

The shaft portion 21 is supported by the swivel bracket 27 via two mounts 31 and 32. One mount 31 is disposed at an upper portion of the shaft portion 21, and the other mount 32 is disposed at an intermediate portion or a lower portion in the upper-lower direction of the shaft portion 21. Each of the mounts 31 and 32 has an elastic support portion configured to elastically support the shaft portion 21. The elastic support portion is configured to prevent vibration transmitted from the shaft portion 21 to the ship. The elastic support portion is configured not to rotate with respect to the swivel bracket 27, and the shaft portion 21 is configured to be rotated with respect to the elastic support portion.

The upper case 35 is fixed to the attachment mechanism 25 and covers the upper end side portion of the shaft portion 21. As illustrated in FIG. 4, the upper case 35 includes a lower case portion 36 and an upper case portion 37.

The lower case portion 36 is formed in a box shape whose upper side is open. A space for accommodating the upper end side portion of the shaft portion 21, the steering device 50, and the like is provided in the lower case portion 36. A lower shaft insertion portion 41 is provided in a lower portion of a rear portion of the lower case portion 36. The lower shaft insertion portion 41 is formed in a cylindrical shape, and the upper end side portion of the shaft portion 21 is inserted into the inside of the lower shaft insertion portion 41. A bearing 42 is provided between the upper end side portion of the shaft portion 21 and the lower shaft insertion portion 41, and the shaft portion 21 is supported by the bearing 42 so as to be rotated about the axis K of the shaft portion 21 with respect to the lower case portion 36. A seal member 43 is provided between the upper end side portion of the shaft portion 21 and the lower shaft insertion portion 41 to liquid-tightly seal therebetween.

The upper case portion 37 has a structure in which a cover portion 38 and a cable arrangement portion 39 are integrated. The upper case portion 37 is disposed above the lower case portion 36 and is attached to the lower case portion 36. Accordingly, an opening portion at an upper side of the lower case portion 36 is closed by the cover portion 38. The cable arrangement portion 39 is disposed above the cover portion 38. The cable arrangement portion 39 is formed in a box shape whose upper side is open. Inside the cable arrangement portion 39, there is provided a space for accommodating rear end side portions of external power cables 61 and 63, upper end portions of internal power cables 62 and 64, terminal connection members 69 and 70, an upper end side portion of an internal signal cable 76, connectors 77 and 78, and the like. A top plate 40 configured to close an opening portion at an upper side of the cable arrangement portion 39 is attached to the cable arrangement portion 39. An upper shaft insertion portion 44 is provided at a rear portion of the cover portion 38. The upper shaft insertion portion 44 is formed in a cylindrical shape. The inside of the lower case portion 36 and the inside of the cable arrangement portion 39 communicate with each other via the inside of the upper shaft insertion portion 44. An upper end portion of the shaft portion 21 is inserted into the inside of the upper shaft insertion portion 44 from below so as to be rotatable with respect to the upper case portion 37. An upper bush 80 is inserted into the inside of the upper shaft insertion portion 44 from above. A seal member 45 is provided between the upper end portion of the shaft portion 21 and the upper shaft insertion portion 44 to liquid-tightly seal therebetween.

The upper case 35 is fixed to the upper portion of the front bracket portion 28 of the swivel bracket 27 in the attachment mechanism 25 via mounts 48 and 49. The mounts 48 and 49 are each formed of an elastic member, and the upper case 35 is elastically supported by the mounts 48 and 49.

The steering device 50 is provided in the lower case portion 36 of the upper case 35. The steering device 50 is positioned on an upper side of the attachment mechanism 25. The steering device 50 includes a turning motor 51 that is a motor configured to generate power for rotating the shaft portion 21, and a worm 55 and a worm wheel 57 that are power transmission mechanisms configured to transmit the power of the turning motor 51 to the shaft portion 21.

The turning motor 51 is disposed in front of the shaft portion 21. The worm 55 is disposed between the turning motor 51 and the shaft portion 21. As illustrated in FIG. 5, the turning motor 51 is disposed such that an extension direction of an output shaft 52 is the left-right direction. The worm 55 is disposed such that an extension direction of a shaft portion 56 forming a rotation axis of the worm 55 is the left-right direction. The turning motor 51 is fixed in a turning motor case 58 provided at a front portion in the lower case portion 36. The worm 55 is rotatably supported by the turning motor case 58. A gear 53 is fixed to a right end portion of the output shaft 52 of the turning motor 51, a gear 54 is fixed to a right end portion of the shaft portion 56 of the worm 55, and the gear 53 and the gear 54 mesh with each other. The rotation of the output shaft 52 of the turning motor 51 is transmitted to the worm 55 via the gears 53 and 54.

The worm wheel 57 is disposed coaxially with the shaft portion 21 on an outer peripheral side of the shaft portion 21. The worm wheel 57 is fixed to the shaft portion 21 via, for example, a key or a spline, and the shaft portion 21 and the worm wheel 57 rotate integrally. The worm 55 and the worm wheel 57 mesh with each other, and rotation of the worm 55 is transmitted to the worm wheel 57.

When the turning motor 51 is driven, the output shaft 52 rotates, and the rotation of the output shaft 52 is transmitted to the worm 55 via the gears 53 and 54, so that the worm 55 rotates. The rotation of the worm 55 is transmitted to the shaft portion 21 via the worm wheel 57, and the shaft portion 21 rotates about the axis K. The rotation of the shaft portion 21 changes an orientation of the propulsion device 2 in the left-right direction.

### Configuration Regarding Cable Wiring

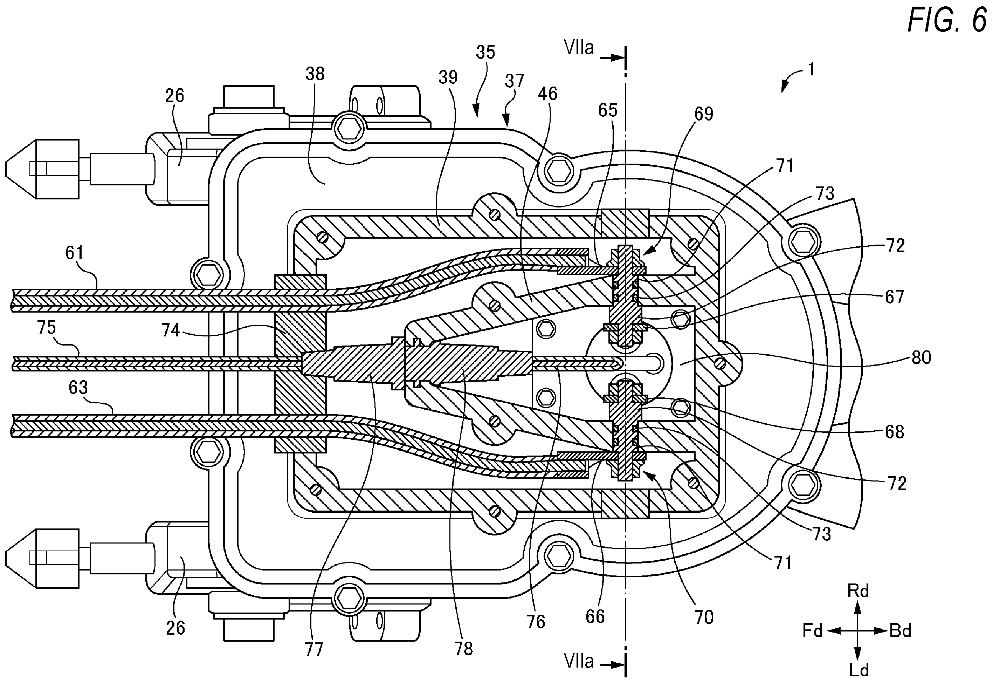

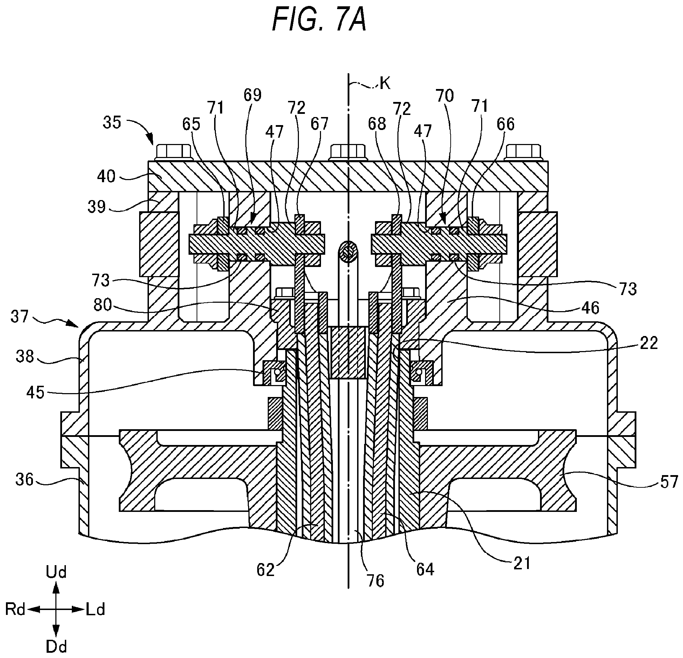

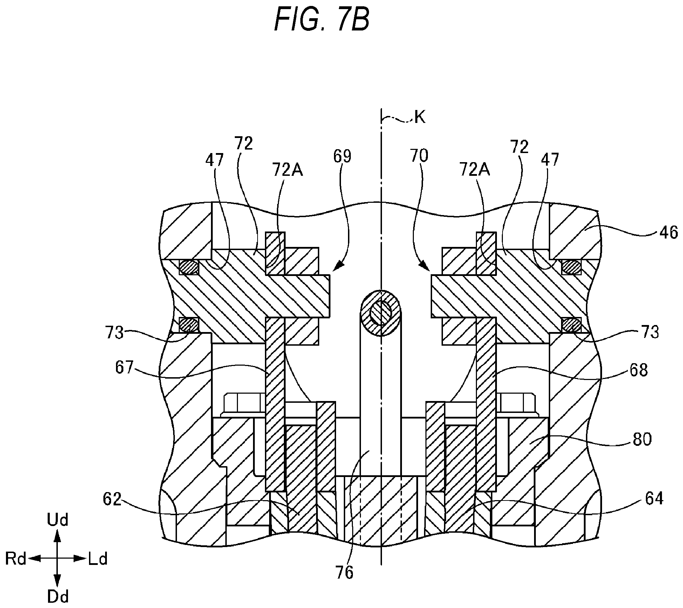

FIG. 6 illustrates a cross section of the outboard motor 1 taken along a cutting line VI-VI in FIG. 4 as viewed from above. FIG. 7A illustrates a cross section of an upper portion of the outboard motor 1 taken along a cutting line VIIa-VIIa in FIG. 6 as viewed from the front (left in FIG. 6). FIG. 7B illustrates an enlarged view of the terminal connection members 69 and 70 and the like in FIG. 7A.

As illustrated in FIGS. 4, 6, and 7A, the outboard motor 1 includes the two external power cables 61 and 63, the two internal power cables 62 and 64, and the two terminal connection members 69 and 70 as components related to electric power supply to the propulsion device 2. In addition, the outboard motor 1 includes an external signal cable 75, the internal signal cable 76, and two connectors 77 and 78 fitted to each other as components related to transmission of an electric signal to the propulsion device 2. Each of the external power cables 61 and 63 is a specific example of a "first cable portion", each of the internal power cables 62 and 64 is a specific example of a "second cable portion", and each of the terminal connection members 69 and 70 is a specific example of a "cable support portion". The external signal cable 75 is a specific example of the "first cable portion", the internal signal cable 76 is a specific example of the "second cable portion", and the connector 78 is a specific example of the "cable support portion".

The two external power cables 61 and 63 and the two internal power cables 62 and 64 are electric cables for supplying electric power for driving the drive motor 4 of the propulsion device 2 from a battery provided in the ship to which the outboard motor 1 is attached, to the propulsion device 2, for example. Specifically, of the two external power cables 61 and 63 and the two internal power cables 62 and 64, the external power cables 61 and the internal power cables 62 are electric cables that connect a positive terminal of the battery and a positive terminal of the inverter 6 of the propulsion device 2, for example. The external power cable 63 and the internal power cable 64 are electric cables that connect a negative terminal of the battery and a negative terminal (or a ground terminal) of the inverter 6, for example. Each of the external power cables 61 and 63 and the internal power cables 62 and 64 is a single-core cable, and includes a core wire formed of a conductive material and a coating formed of an insulating material covering an outer peripheral side of the core wire.

When electric power is supplied from the battery to the inverter 6, from an electrical standpoint, one cable is sufficient to connect the positive terminal of the battery and the positive terminal of the inverter 6, and one cable is sufficient to connect the negative terminal of the battery and the negative terminal of the inverter 6. However, in the present embodiment, the cable connecting the positive terminal of the battery and the positive terminal of the inverter 6 is divided into the external power cable 61 and the internal power cable 62, and the cable connecting the negative terminal of the battery and the negative terminal of the inverter 6 is divided into the external power cable 63 and the internal power cable 64. From an electrical standpoint, the external power cable 61 and the internal power cable 62 are connected in series between the positive terminal of the battery and the positive terminal of the inverter 6, and the external power cable 63 and the internal power cable 64 are connected in series between the negative terminal of the battery and the negative terminal of the inverter 6.

A front end portion of the external power cable 61 is connected to the positive terminal of the battery provided in the ship to which the outboard motor 1 is attached. The external power cable 61 extends rearward from the ship toward the outboard motor 1, and for example, passes above the transom to reach the outboard motor 1. Further, the external power cable 61 enters the cable arrangement portion 39 from the front of the cable arrangement portion 39 of the upper case portion 37 of the upper case 35 as illustrated in FIG. 4, and extends rearward through a right portion in the cable arrangement portion 39 as illustrated in FIG. 6. A terminal 65 made of a conductive material such as metal is attached to a rear end portion of the external power cable 61. The terminal 65 is electrically connected to the core wire of the external power cable 61. On the other hand, a front end portion of the external power cable 63 is connected to the negative terminal of the battery provided in the ship to which the outboard motor 1 is attached. Like the external power cable 61, the external power cable 63 extends rearward from the ship and reaches the outboard motor 1. Further, the external power cable 63 enters the cable arrangement portion 39 from the front of the cable arrangement portion 39, and extends rearward through inside a left portion of the cable arrangement portion 39. A terminal 66 made of a conductive material such as metal is attached to the rear end portion of the external power cable 63. The terminal 66 is electrically connected to the core wire of the external power cable 63. Further, the external power cables 61 and 63 are held by a cable holding member 74 provided at the front portion of the cable arrangement portion 39.

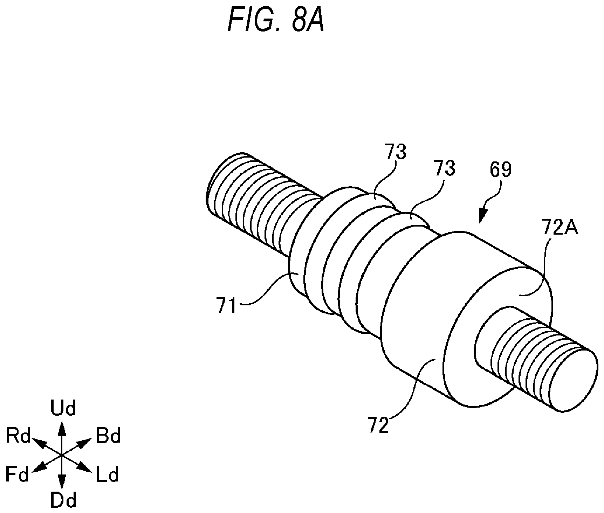

As illustrated in FIG. 6, the two terminal connection members 69 and 70 are provided in the cable arrangement portion 39. FIG. 8A illustrates the terminal connection member 69. As illustrated in FIG. 8A, the terminal connection member 69 is a columnar member formed of a conductive material such as metal. In addition, a first connection portion 71 is formed at one axial end side portion of the terminal connection member 69, and a second connection portion 72 is formed at the other axial end side portion of the terminal connection member 69. A seal member 73 is attached to an outer peripheral portion of an axially intermediate portion of the terminal connection member 69. The terminal connection member 70 is the same member as the terminal connection member 69.

As illustrated in FIG. 6, each of the terminal connection members 69 and 70 is arranged in the cable arrangement portion 39 such that the extension direction of the axis thereof is the left-right direction. Further, the terminal connection members 69 and 70 are respectively arranged at a right rear portion and a left rear portion in the cable arrangement portion 39 so as to be bilaterally symmetrical to each other. Specifically, an inner wall 46 is provided in the cable arrangement portion 39, and as illustrated in FIG. 7A, terminal support holes 47 are provided in a right rear portion and a left rear portion of the inner wall 46, respectively. The terminal connection member 69 is inserted into the terminal support hole 47 provided in the right rear portion of the inner wall 46, and is supported and fixed to the right rear portion of the inner wall 46. Further, the seal member 73 attached to the terminal connection member 69 is positioned in the terminal support hole 47 and comes into contact with an inner peripheral surface of the terminal support hole 47 to liquid-tightly seal between the terminal connection member 69 and the terminal support hole 47. Further, in a state in which the terminal connection member 69 is supported by the terminal support hole 47, the first connection portion 71 of the terminal connection member 69 is positioned on a right end side of the terminal connection member 69, and the second connection portion 72 of the terminal connection member 69 is positioned on a left end side of the terminal connection member 69. The terminal connection member 69 is disposed such that the second connection portion 72 is positioned above an opening portion 22 at an upper side of the shaft portion 21. As illustrated in FIG. 7B, the terminal connection member 69 is disposed such that a connection surface 72A of the second connection portion 72 is parallel to the axis K of the shaft portion 21. On the other hand, as illustrated in FIG. 7A, the terminal connection member 70 is inserted into the terminal support hole 47 provided in the left rear portion of the inner wall 46, and is supported and fixed to the left rear portion of the inner wall 46. In addition, the seal member 73 attached to the terminal connection member 70 comes into contact with the inner peripheral surface of the terminal support hole 47 in the terminal support hole 47 to liquid-tightly seal between the terminal connection member 70 and the terminal support hole 47. In a state in which the terminal connection member 70 is supported by the terminal support hole 47 provided in the left rear portion of the inner wall 46, the first connection portion 71 of the terminal connection member 70 is positioned on the left end side of the terminal connection member 70, and the second connection portion 72 of the terminal connection member 70 is positioned on the right end side of the terminal connection member 70. The terminal connection member 70 is disposed such that the second connection portion 72 is positioned above the opening portion 22 at the upper side of the shaft portion 21. As illustrated in FIG. 7B, the terminal connection member 70 is disposed such that the connection surface 72A of the second connection portion 72 is parallel to the axis K of the shaft portion 21.

As illustrated in FIG. 6, the terminal 65 of the external power cable 61 is connected to the first connection portion 71 of the terminal connection member 69. Accordingly, the core wire of the external power cable 61 is electrically connected to the terminal connection member 69. In addition, the terminal 66 of the external power cable 63 is connected to the first connection portion 71 of the terminal connection member 70. Accordingly, the core wire of the external power cable 63 is electrically connected to the terminal connection member 70.

As illustrated in FIG. 2, the internal power cable 62 is inserted into the shaft portion 21. The internal power cable 62 passes through inside the shaft portion 21. A lower end portion of the internal power cable 62 is connected and fixed to the positive terminal of the inverter 6 of the propulsion device 2. As illustrated in FIGS. 4 and 7A, an upper end portion of the internal power cable 62 is drawn out of the shaft portion 21 from the opening portion 22 at the upper side of the shaft portion 21. A terminal 67 made of a conductive material such as metal is attached to the upper end portion of the internal power cable 62. The terminal 67 is electrically connected to the core wire of the internal power cable 62. In addition, the terminal 67 is connected to the connection surface 72A of the second connection portion 72 of the terminal connection member 69 disposed in the right rear portion in the cable arrangement portion 39. Accordingly, the core wire of the internal power cable 62 is electrically connected to the second connection portion 72 of the terminal connection member 69, and as a result, the core wire of the internal power cable 62 is electrically connected to the core wire of the external power cable 61 via the terminal connection member 69. Further, the terminal 67 to which the internal power cable 62 is connected is connected to the second connection portion 72 of the terminal connection member 69, so that a portion of the internal power cable 62 positioned above the opening portion 22 at the upper side of the shaft portion 21, that is, the upper end portion of the internal power cable 62 is fixed to the upper case portion 37 of the upper case 35 by the terminal connection member 69. Accordingly, the portion of the internal power cable 62 positioned above the opening portion 22 at the upper side of the shaft portion 21 is supported so as not to be rotatable in the left-right direction with respect to the attachment mechanism 25.

The internal power cable 64 is inserted into the shaft portion 21 and passes through the shaft portion 21. A lower end portion of the internal power cable 64 is connected and fixed to the negative terminal of the inverter 6 of the propulsion device 2. An upper end portion of the internal power cable 64 is drawn out of the shaft portion 21 from the opening portion 22 at the upper side of the shaft portion 21. A terminal 68 made of a conductive material such as metal is attached to the upper end portion of the internal power cable 64. The terminal 68 is electrically connected to the core wire of the internal power cable 64. In addition, the terminal 68 is connected to the connection surface 72A of the second connection portion 72 of the terminal connection member 70 disposed in the left rear portion in the cable arrangement portion 39. Accordingly, the core wire of the internal power cable 64 is electrically connected to the second connection portion 72 of the terminal connection member 70, and as a result, the core wire of the internal power cable 64 is electrically connected to the core wire of the external power cable 63 via the terminal connection member 70. Further, the terminal 68 to which the internal power cable 64 is connected is connected to the second connection portion 72 of the terminal connection member 70, so that a portion of the internal power cable 64 positioned above the opening portion 22 at the upper side of the shaft portion 21, that is, the upper end portion of the internal power cable 64 is fixed to the upper case portion 37 of the upper case 35 by the terminal connection member 70. Accordingly, the portion of the internal power cable 64 positioned above the opening portion 22 at the upper side of the shaft portion 21 is supported so as not to be rotatable in the left-right direction with respect to the attachment mechanism 25.

The external signal cable 75 and the internal signal cable 76 are electric cables for transmitting an electric signal for driving the drive motor 4 of the propulsion device 2 to the propulsion device 2. For example, the external signal cable 75 and the internal signal cable 76 are electric cables that transmit a control signal for increasing or decreasing a rotation speed of the drive motor 4 of the propulsion device 2 from a remote control device to the inverter 6 of the propulsion device 2 according to an operation amount (inclination angle) of a lever of the remote control device for the outboard motor 1 provided in the ship to which the outboard motor 1 is attached. For example, both the external signal cable 75 and the internal signal cable 76 are single-core cables or coaxial cables.

A front end portion of the external signal cable 75 is connected to, for example, a signal output terminal of the remote control device provided in the ship to which the outboard motor 1 is attached. The external signal cable 75 extends rearward from the ship toward the outboard motor 1, and for example, passes above the transom to reach the outboard motor 1. Further, as illustrated in FIG. 4, the external signal cable 75 enters the cable arrangement portion 39 from the front of the cable arrangement portion 39 of the upper case portion 37 of the upper case 35. A rear end portion of the external signal cable 75 is connected to the internal signal cable 76 via the connectors 77 and 78 in the cable arrangement portion 39. The connectors 77 and 78 are fitted to each other and electrically connected to each other. The connector 78 is fixed to a front portion of the inner wall 46 of the cable arrangement portion 39.

An upper end portion of the internal signal cable 76 is positioned in the cable arrangement portion 39 and is connected to the external signal cable 75 via the connectors 77 and 78. The internal signal cable 76 extends rearward from the front portion in the cable arrangement portion 39 in which the connector 78 is arranged, then bends downward, and then enters the shaft portion 21 from the opening portion 22 at the upper side of the shaft portion 21. Subsequently, the internal signal cable 76 extends downward in the shaft portion 21, passes through the shaft portion 21, and reaches the inverter 6 of the propulsion device 2, as illustrated in FIG. 2. A lower end portion of the internal signal cable 76 is connected to, for example, a control terminal of the inverter 6.

As described above, in the outboard motor 1, the internal power cables 62 and 64 and the internal signal cable 76 pass through the shaft portion 21. In addition, the internal power cables 62 and 64 and the internal signal cable 76 are drawn out of the shaft portion 21 from the opening portion 22 at the upper side of the shaft portion 21. The upper end portion of the internal power cable 62 is connected to the second connection portion 72 of the terminal connection member 69 positioned above the opening portion 22 at the upper side of the shaft portion 21. The upper end portion of the internal power cable 62 is fixed to the upper case portion 37 via the terminal connection member 69. The upper end portion of the internal power cable 64 is connected to the second connection portion 72 of the terminal connection member 70 positioned above the opening portion 22 at the upper side of the shaft portion 21. The upper end portion of the internal power cable 64 is fixed to the upper case portion 37 via the terminal connection member 70. In addition, the connector 78 is attached to the upper end portion of the internal signal cable 76. The connector 78 is disposed above and in front of the opening portion 22 at the upper side of the shaft portion 21 and in the vicinity of the opening portion 22 and is fixed to the upper case portion 37. On the other hand, the lower end portion of the internal power cable 62 is fixed to the positive terminal of the inverter 6 of the propulsion device 2. The lower end portion of the internal power cable 64 is fixed to the negative terminal of the inverter 6. The lower end portion of the internal signal cable 76 is fixed to the control terminal of the inverter 6. Therefore, when the shaft portion 21 and the propulsion device 2 are rotated in the left direction by the driving of the steering device 50, the internal power cables 62 and 64 and the internal signal cable 76 are displaced so as to be twisted substantially in the left direction about the axis K of the shaft portion 21 in the shaft portion 21 when the outboard motor 1 is viewed from above. In addition, when the shaft portion 21 and the propulsion device 2 are rotated in the right direction by the driving of the steering device 50, the internal power cables 62 and 64 and the internal signal cable 76 are displaced so as to be twisted in the right direction substantially about the axis K of the shaft portion 21 in the shaft portion 21 when the outboard motor 1 is viewed from above.

Considering that the internal power cables 62 and 64 and the internal signal cable 76 are twisted in the shaft portion 21 due to the rotation of the shaft portion 21 and the propulsion device 2, it is preferable that each of the internal power cables 62 and 64 and the internal signal cable 76 has a strength capable of withstanding repeated twisting. It is preferable to insert the internal power cables 62 and 64 and the internal signal cable 76 into the shaft portion 21 with appropriate slack so that the internal power cables 62 and 64 and the internal signal cable 76 are easily twisted in the shaft portion 21. In addition, it is preferable that the internal power cables 62 and 64 and the internal signal cable 76 are formed of a material having appropriate softness so that the internal power cables 62 and 64 and the internal signal cable 76 are easily twisted in the shaft portion 21. In addition, when the internal power cables 62 and 64 and the internal signal cable 76 are displaced in the shaft portion 21, the internal power cables 62 and 64 or the internal signal cable 76 may come into contact with an inner peripheral surface of the shaft portion 21. In consideration of this, it is preferable to set surface roughness of the inner peripheral surface of the shaft portion 21 to such a degree that wear of the coating of the internal power cables 62 and 64 or the internal signal cable 76 hardly occurs even when the internal power cables 62 and 64 or the internal signal cable 76 comes into contact with the inner peripheral surface of the shaft portion 21. When the internal power cables 62 and 64 and the internal signal cable 76 are displaced in the shaft portion 21, the internal power cables 62 and 64 and the internal signal cable 76 may come into contact with each other. In consideration of this, it is preferable to set the strength of the coating of each of the internal power cables 62 and 64 and the internal signal cable 76 so that the coating of the cable is hardly worn even when the cables come into contact with each other (a protective member may be provided in each cable). In addition, in order to prevent the internal power cables 62 and 64 and the internal signal cable 76 from being greatly twisted, a rotation angle of the shaft portion 21 and the propulsion device 2 by the steering device 50 may be limited to, for example, about 90 degrees to the left and right.

On the other hand, the external power cables 61 and 63 and the external signal cable 75 are disposed outside the shaft portion 21. The rear end portion of the external power cable 61 is connected to the first connection portion 71 of the terminal connection member 69. The rear end portion of the external power cable 61 is fixed to the upper case portion 37 via the terminal connection member 69. The rear end portion of the external power cable 63 is connected to the first connection portion 71 of the terminal connection member 70. The rear end portion of the external power cable 63 is fixed to the upper case portion 37 via the terminal connection member 70. The connector 77 attached to the rear end portion of the external signal cable 75 is fitted to the connector 78. The connector 77 is fixed to the upper case portion 37 via the connector 78. Therefore, even when the shaft portion 21 and the propulsion device 2 are rotated in the left direction or the right direction by the driving of the steering device 50, none of the external power cables 61 and 63 and the external signal cable 75 is displaced.

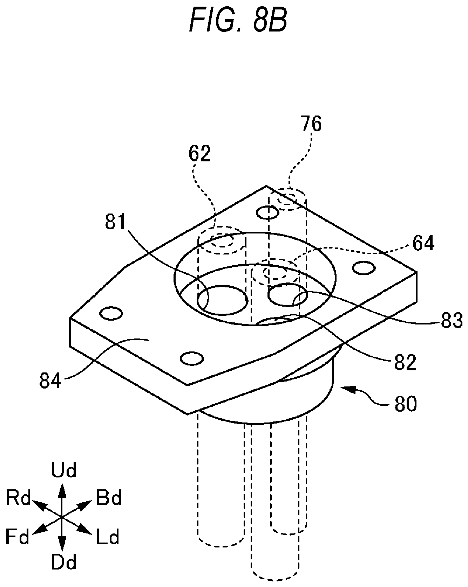

As illustrated in FIG. 4, the upper bush 80 is provided at the uppermost end portion of the shaft portion 21. FIG. 8B illustrates the upper bush 80. As illustrated in FIG. 8B, the upper bush 80 is formed in a columnar shape. The upper bush 80 is provided with three cable insertion holes 81, 82, and 83. A flange-shaped fixing portion 84 is formed on an upper portion of the upper bush 80. As illustrated in FIG. 4, the upper bush 80 is inserted into the opening portion 22 at the upper side of the shaft portion 21 so as to be rotatable with respect to the shaft portion 21. As illustrated in FIG. 6, the fixing portion 84 of the upper bush 80 is fixed to the upper case portion 37 using a fixing member such as a bolt. Accordingly, even when the shaft portion 21 and the propulsion device 2 are rotated in the left-right direction by the driving of the steering device 50, the upper bush 80 is not rotated. The upper end portion of the internal power cable 62 is inserted into the cable insertion hole 81 of the upper bush 80, the upper end portion of the internal power cable 64 is inserted into the cable insertion hole 82, and the upper end portion of the internal signal cable 76 is inserted into the cable insertion hole 83. The cable insertion holes 81, 82, and 83 are disposed at positions separated from each other in a direction orthogonal to an extension direction of the axis K of the shaft portion 21. Therefore, the upper end portions of the internal power cables 62 and 64 and the internal signal cable 76 are positioned so as to be separated from each other in the direction orthogonal to the extension direction of the axis K of the shaft portion 21 inside the uppermost end portion of the shaft portion 21 by the upper bush 80. By providing the upper bush 80 at the uppermost end portion of the shaft portion 21, it is possible to prevent the upper end portion of the internal power cable 62 from being displaced with respect to the second connection portion 72 of the terminal connection member 69, the upper end portion of the internal power cable 64 from being displaced with respect to the second connection portion 72 of the terminal connection member 70, and the upper end portion of the internal signal cable 76 from being displaced with respect to the connector 78 when the internal power cables 62 and 64 and the internal signal cable 76 are twisted in the shaft portion 21 along with the rotation of the shaft portion 21 and the propulsion device 2. Accordingly, when the internal power cables 62 and 64 and the internal signal cable 76 are twisted in the shaft portion 21 along with the rotation of the shaft portion 21 and the propulsion device 2, the force applied from these cables to the second connection portions 72 of the terminal connection members 69 and 70 and the connector 78 can be reduced. Further, since the upper end portions of the internal power cables 62 and 64 and the internal signal cable 76 are positioned by the upper bush 80 so as to be separated from each other in the direction orthogonal to the extension direction of the axis K of the shaft portion 21, the internal power cables 62 and 64 and the internal signal cable 76 are easily twisted when the shaft portion 21 and the propulsion device 2 are rotated in the left-right direction by the driving of the steering device 50. The upper bush 80 is a specific example of a "cable positioning member".

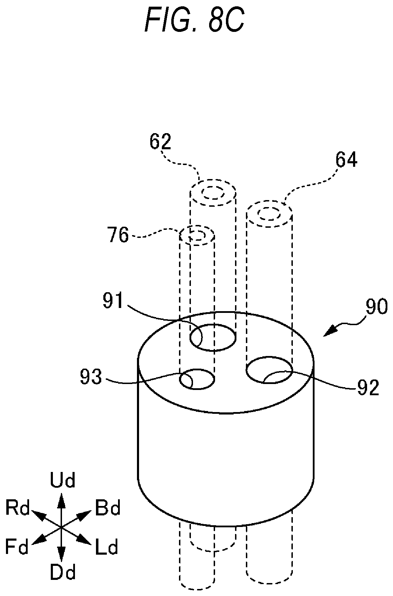

As illustrated in FIG. 2, a lower bush 90 is provided at a lower end portion of the shaft portion 21. The lower bush 90 is inserted into the lower end portion of the shaft portion 21 and is fixed to the lower end portion of the shaft portion 21 so as not to rotate with respect to the shaft portion 21. FIG. 8C illustrates the lower bush 90. As illustrated in FIG. 8C, the lower bush 90 is formed in a columnar shape. The lower bush 90 is provided with three cable insertion holes 91, 92, and 93. The lower end portion of the internal power cable 62 is inserted into the cable insertion hole 91, the lower end portion of the internal power cable 64 is inserted into the cable insertion hole 92, and the lower end portion of the internal signal cable 76 is inserted into the cable insertion hole 93. The cable insertion holes 91, 92, and 93 are disposed at positions separated from each other in a direction orthogonal to the extension direction of the axis K of the shaft portion 21. Therefore, the lower end portions of the internal power cables 62 and 64 and the internal signal cable 76 are positioned so as to be separated from each other in the direction orthogonal to the extension direction of the axis K of the shaft portion 21 inside the lower end portion of the shaft portion 21 by the lower bush 90. Since the lower bush 90 is fixed to the shaft portion 21 so as not to be rotatable, the lower bush 90 rotates integrally with the shaft portion 21 and the propulsion device 2 when the shaft portion 21 and the propulsion device 2 rotate in the left-right direction by driving of the steering device 50. By providing the lower bush 90 at the lower end portion of the shaft portion 21, when the internal power cables 62 and 64 and the internal signal cable 76 are twisted in the shaft portion 21 along with the rotation of the shaft portion 21 and the propulsion device 2, it is possible to prevent the lower end portion of each of the internal power cables 62 and 64 and the internal signal cable 76 from being displaced with respect to the propulsion device 2. Accordingly, when the internal power cables 62 and 64 and the internal signal cable 76 are twisted in the shaft portion 21 along with the rotation of the shaft portion 21 and the propulsion device 2, a force applied from these cables to the terminal of the inverter 6 can be reduced. Further, since the lower end portions of the internal power cables 62 and 64 and the internal signal cable 76 are positioned by the lower bush 90 so as to be separated from each other in the direction orthogonal to the extension direction of the axis K of the shaft portion 21, the internal power cables 62 and 64 and the internal signal cable 76 are easily twisted when the shaft portion 21 and the propulsion device 2 are rotated in the left-right direction by the driving of the steering device 50. The lower bush 90 is a specific example of the "cable positioning member".

As described above, in the outboard motor 1 according to the first embodiment of the present disclosure, the terminal connection member 69 is fixed to the upper case portion 37 of the upper case 35 such that the second connection portion 72 thereof is positioned above the opening portion 22 at the upper side of the shaft portion 21, the cable connecting the positive terminal of the battery and the positive terminal of the inverter 6 of the propulsion device 2 is divided into the external power cable 61 and the internal power cable 62, the external power cable 61 is disposed outside the shaft portion 21, the rear end portion of the external power cable 61 is connected to the first connection portion 71 of the terminal connection member 69, the internal power cable 62 passes through the shaft portion 21, the lower end portion of the internal power cable 62 is fixed to the positive terminal of the inverter 6, and the upper end portion of the internal power cable 62 is drawn out of the shaft portion 21 from the opening portion 22 at the upper side of the shaft portion 21 and is connected to the second connection portion 72 of the terminal connection member 69. In addition, the terminal connection member 70 is fixed to the upper case portion 37 of the upper case 35 such that the second connection portion 72 thereof is positioned above the opening portion 22 at the upper side of the shaft portion 21, the cable connecting the negative terminal of the battery and the negative terminal of the inverter 6 of the propulsion device 2 is divided into the external power cable 63 and the internal power cable 64, the external power cable 63 is disposed outside the shaft portion 21, the rear end portion of the external power cable 63 is connected to the first connection portion 71 of the terminal connection member 70, the internal power cable 64 passes through the shaft portion 21, the lower end portion of the internal power cable 64 is fixed to the negative terminal of the inverter 6, and the upper end portion of the internal power cable 64 is drawn out of the shaft portion 21 from the opening portion 22 at the upper side of the shaft portion 21 and is connected to the second connection portion 72 of the terminal connection member 70. In such a configuration, when the shaft portion 21 and the propulsion device 2 are rotated in the left-right direction by driving of the steering device 50, the internal power cables 62 and 64 are displaced so as to be twisted substantially about the axis K of the shaft portion 21 in the shaft portion 21. On the other hand, even when the shaft portion 21 and the propulsion device 2 are rotated in the left-right direction by driving of the steering device 50, neither of the external power cables 61 and 63 is displaced. Since neither of the external power cables 61 and 63 is displaced even when the shaft portion 21 and the propulsion device 2 rotate in the left-right direction, the external power cable 61 or the external power cable 63 does not hit a hull or an object provided on the ship due to the rotation of the shaft portion 21 and the propulsion device 2. Further, when the shaft portion 21 and the propulsion device 2 rotate in the left-right direction, the internal power cables 62 and 64 are merely displaced so as to be twisted in the shaft portion 21, and thus the internal power cable 62 or the internal power cable 64 does not hit a hull or an object provided on the ship due to the rotation of the shaft portion 21 and the propulsion device 2. As described above, according to the outboard motor 1 according to the present embodiment, when the propulsion device 2 rotates in the left-right direction with respect to the ship, the cables 61 to 64 connected to the propulsion device 2 is prevented from being displaced in conjunction with the propulsion device 2, and thus, when the propulsion device 2 rotates in the left-right direction with respect to the ship, the cables 61 to 64 connected to the propulsion device 2 is prevented from hitting a hull or an object provided on the ship.

In the outboard motor 1 according to the present embodiment, when the propulsion device 2 rotates in the left-right direction, the internal power cables 62 and 64 are displaced so as to be twisted substantially about the axis K of the shaft portion 21 in the shaft portion 21, and the external power cables 61 and 63 are not displaced. Therefore, in the outboard motor 1, it is sufficient to secure a space above the opening portion 22 at the upper side of the shaft portion 21 and a space in the shaft portion 21 as a space for allowing the displacement of the cables 61 to 64 accompanying the rotation of the propulsion device 2. Therefore, the space for allowing the displacement of the cables 61 to 64 accompanying the rotation of the propulsion device 2 can be reduced. Accordingly, a compact outboard motor 1 is achieved.

In the outboard motor 1 according to the first embodiment of the present disclosure, the connector 78 is disposed above and in front of the opening portion 22 at the upper side of the shaft portion 21 and in the vicinity of the opening portion 22 and is fixed to the upper case portion 37. For example, the cable connecting the signal output terminal of the remote control device provided in the ship and the control terminal of the inverter 6 of the propulsion device 2 is divided into the external signal cable 75 and the internal signal cable 76, the external signal cable 75 is disposed outside the shaft portion 21, the connector 77 attached to the rear end portion of the external signal cable 75 is fitted to the connector 78, the internal signal cable 76 passes through the shaft portion 21, and the lower end portion of the internal signal cable 76 is fixed to the control terminal of the inverter 6. The upper end portion of the internal signal cable 76 is drawn out of the shaft portion 21 through the opening portion 22 at the upper side of the shaft portion 21 and is attached to the connector 78. In such a configuration, when the shaft portion 21 and the propulsion device 2 are rotated in the left-right direction by driving of the steering device 50, the internal signal cable 76 is displaced so as to be twisted substantially about the axis K of the shaft portion 21 in the shaft portion 21. On the other hand, even when the shaft portion 21 and the propulsion device 2 are rotated in the left-right direction by driving of the steering device 50, the external signal cable 75 is not displaced. Since the external signal cable 75 is not displaced even when the shaft portion 21 and the propulsion device 2 rotate in the left-right direction, the external signal cable 75 does not hit a hull or an object provided on the ship due to the rotation of the shaft portion 21 and the propulsion device 2. Further, when the shaft portion 21 and the propulsion device 2 are rotated in the left-right direction, the internal signal cable 76 is only displaced so as to be twisted in the shaft portion 21, and thus the internal signal cable 76 does not hit a hull or an object provided on the ship due to the rotation of the shaft portion 21 and the propulsion device 2. As described above, according to the outboard motor 1 of the present embodiment, when the propulsion device 2 rotates in the left-right direction with respect to the ship, the cables 75 and 76 connected to the propulsion device 2 are prevented from being displaced in conjunction with the propulsion device 2, and therefore, when the propulsion device 2 rotates in the left-right direction with respect to the ship, the cables 75 and 76 connected to the propulsion device 2 are prevented from hitting a hull or an object provided on the ship.

In the outboard motor 1 according to the present embodiment, when the propulsion device 2 rotates in the left-right direction, the internal signal cable 76 is displaced so as to be twisted substantially about the axis K of the shaft portion 21 in the shaft portion 21, and the external signal cable 75 is not displaced. Therefore, in the outboard motor 1, it is sufficient to generally secure the space above the opening portion 22 at the upper side of the shaft portion 21 and the space in the shaft portion 21 as the space for allowing displacement of the cables 75 and 76 accompanying rotation of the propulsion device 2. Therefore, the space for allowing the displacement of the cables 75 and 76 accompanying the rotation of the propulsion device 2 can be reduced. Accordingly, the compact outboard motor 1 is achieved.

In supplying electric power from the battery to the inverter 6, from an electrical standpoint, only one cable is sufficient to connect between the positive terminal of the battery and the positive terminal of the inverter 6, but in the outboard motor 1 according to the present embodiment, the cable is divided into the external power cable 61 and the internal power cable 62. The external power cable 61 is routed so as to extend in the front-rear direction outside the shaft portion 21, the internal power cable 62 is routed so as to extend in the upper-lower direction inside the shaft portion 21, and the external power cable 61 and the internal power cable 62 are electrically connected via the terminal connection member 69. With such a configuration, it is possible to reduce a space required for routing the cable connecting the positive terminal of the battery and the positive terminal of the inverter 6.

Specifically, a current value required to drive the drive motor that rotates the propeller is large, and a large current flows through the cable connecting the positive terminal of the battery and the positive terminal of the inverter 6. Therefore, the cable is thick and has high rigidity. Therefore, when the cable is bent in order to change the extension direction of the cable by, for example, 90 degrees during routing the cable, a radius of curvature of the bent portion of the cable increases. As a result, when the number of cables connecting the positive terminal of the battery and the positive terminal of the inverter 6 is one, a space required for routing the cable by bending the cable by 90 degrees increases. On the other hand, in the outboard motor 1 according to the present embodiment, the cable connecting the positive terminal of the battery and the positive terminal of the inverter 6 is divided into the external power cable 61 and the internal power cable 62, and the external power cable 61 extending in the front-rear direction and the internal power cable 62 extending in the upper-lower direction are connected via the terminal connection member 69. According to this configuration, the extension direction of the internal power cable 62 can be changed by 90 degrees with respect to the extension direction of the external power cable 61 without bending both the external power cable 61 and the internal power cable 62. Therefore, the space required for routing the external power cable 61 and the internal power cable 62 connecting the positive terminal of the battery and the positive terminal of the inverter 6 and for disposing the terminal connection member 69 is smaller than the space required for routing one cable connecting the positive terminal of the battery and the positive terminal of the inverter 6 by bending the cable by 90 degrees. As described above, according to the outboard motor 1 of the present embodiment, it is possible to reduce the space required for routing the cable connecting the positive terminal of the battery and the positive terminal of the inverter 6.

In the outboard motor 1 according to the present embodiment, the cable connecting the negative terminal of the battery and the negative terminal of the inverter 6 is divided into the external power cable 63 and the internal power cable 64. The external power cable 63 is routed so as to extend in the front-rear direction outside the shaft portion 21, the internal power cable 64 is routed so as to extend in the upper-lower direction inside the shaft portion 21, and the external power cable 63 and the internal power cable 64 are electrically connected via the terminal connection member 70. With such a configuration, it is possible to reduce the space required for routing the cable connecting the negative terminal of the battery and the negative terminal of the inverter 6.

As described above, according to the outboard motor 1 of the present embodiment, since the space required for routing the cable connecting the positive terminal of the battery and the positive terminal of the inverter 6 and the space required for routing the cable connecting the negative terminal of the battery and the negative terminal of the inverter 6 can both be reduced, and the outboard motor 1 can be reduced in size.

In the outboard motor 1 according to the present embodiment, the terminal connection members 69 and 70 are disposed such that the second connection portion 72 is positioned above the opening portion 22 at the upper side of the shaft portion 21, the second connection portion 72 of each of the terminal connection members 69 and 70 has the connection surface 72A parallel to the axis K of the shaft portion 21, the upper end portion of the internal power cable 62 is connected to the connection surface 72A of the second connection portion 72 of the terminal connection member 69, and the upper end portion of the internal power cable 64 is connected to the connection surface 72A of the second connection portion 72 of the terminal connection member 70. With this configuration, the upper end portion of the internal power cable 62 extending in the upper-lower direction can be connected to the second connection portion 72 of the terminal connection member 69 with almost no bending, and the upper end portion of the internal power cable 64 extending in the upper-lower direction can be connected to the second connection portion 72 of the terminal connection member 70 with almost no bending. Therefore, it is possible to prevent the upper end side portions of the internal power cables 62 and 64 can be prevented from bending in the shaft portion 21, and it is possible to prevent the upper end side portion of the internal power cable 62 or 64 from coming into strong contact with the inner peripheral surface of the shaft portion 21.

In the outboard motor 1 according to the present embodiment, the steering device 50 is positioned on the upper side than the attachment mechanism 25, and the terminal connection members 69 and 70 are positioned on an upper side than the steering device 50. With this configuration, it is possible to increase a distance in the upper-lower direction between each of the terminal connection members 69 and 70 and the propulsion device 2, and it is possible to reduce the amount of displacement (amount of torsion) per unit length of each of the internal power cables 62 and 64 and the internal signal cable 76 in the shaft portion 21 when the propulsion device 2 is rotated by driving of the steering device 50. Therefore, when the propulsion device 2 rotates, it is possible to prevent the internal power cables 62 and 64 or the internal signal cable 76 from coming into strong contact with the inner peripheral surface of the shaft portion 21, and when the propulsion device 2 rotates, it is possible to prevent the internal power cables 62 and 64 and the internal signal cable 76 from coming into strong contact with each other.

In the outboard motor 1 according to the present embodiment, the worm 55 and the worm wheel 57 of the steering device 50 are disposed outside the shaft portion 21, while the internal power cables 62 and 64 and the internal signal cable 76 pass through the shaft portion 21 and pass through a place where the worm 55 and the worm wheel 57 are disposed in the outboard motor 1. Therefore, it is possible to prevent the internal power cables 62 and 64 or the internal signal cable 76 from coming into contact with the worm 55 or the worm wheel 57.

### Second Embodiment

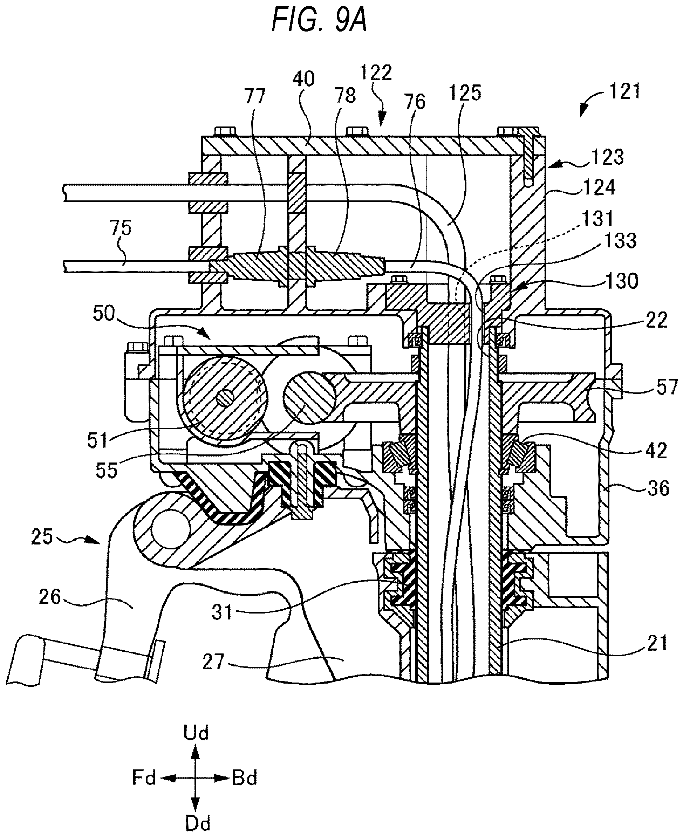

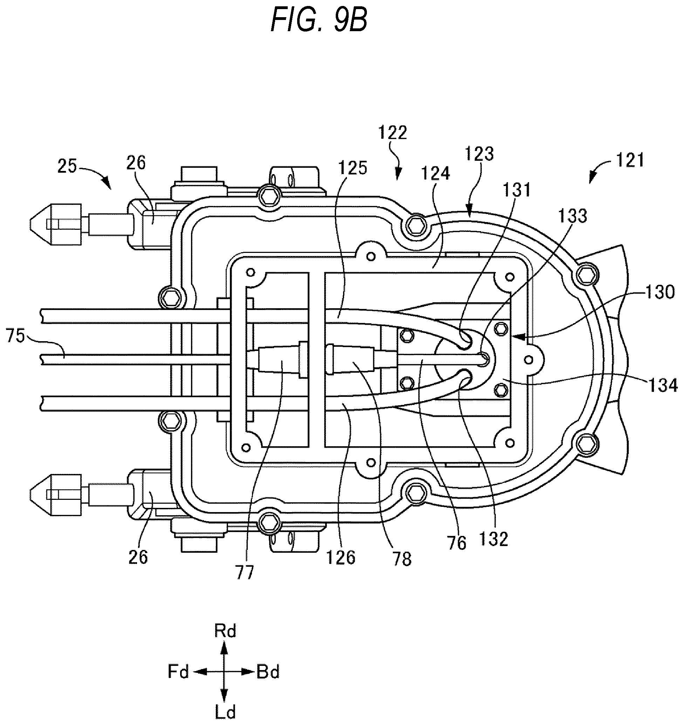

FIG. 9A illustrates a cross section of an upper portion of an outboard motor 121 according to a second embodiment of the present disclosure. FIG. 9B illustrates a state in which the outboard motor 121 from which the top plate 40 of an upper case 122 is removed is viewed from above. In the outboard motor 121 according to the second embodiment of the disclosure, the same components as those of the outboard motor 1 according to the first embodiment of the disclosure are denoted by the same reference numerals, and description thereof is omitted or simplified.

As illustrated in FIGS. 9A and 9B, the outboard motor 121 includes a single power cable 125 that connects the positive terminal of the battery and the positive terminal of the inverter of the propulsion device. A lower portion of the power cable 125 extends in the upper-lower direction through the shaft portion 21, and a lower end portion of the power cable 125 is connected and fixed to the positive terminal of the inverter of the propulsion device. An upper portion of the power cable 125 is drawn out of the shaft portion 21 from the opening portion 22 at the upper side of the shaft portion 21. In the power cable 125, a portion thereof drawn out from the opening portion 22 at the upper side of the shaft portion 21 is bent so as to draw an arc having a central angle of 90 degrees, then extends forward in a cable arrangement portion 124 of the upper case portion 123 of the upper case 122, then advances from the front portion of the cable arrangement portion 124 to the outside of the cable arrangement portion 124, and then extends forward toward a ship to which the outboard motor 121 is attached. A front end portion of the power cable 125 is connected to the positive terminal of the battery provided in the ship to which the outboard motor 121 is attached. The outboard motor 121 also includes a single power cable 126 that connects the negative terminal of the battery and the negative terminal of the inverter of the propulsion device. The power cable 126 is routed similarly to the power cable 125. A lower end portion of the power cable 126 is connected and fixed to the negative terminal of the inverter of the propulsion device. A front end portion of the power cable 126 is connected to the negative terminal of the battery provided in the ship to which the outboard motor 121 is attached.

The outboard motor 121 also includes an upper bush 130 that supports a portion of the power cable 125 that is positioned above the opening portion 22 from the inside of the opening portion 22 at the upper side of the shaft portion 21 and a portion of the power cable 126 that is positioned above the opening portion 22 from the inside of the opening portion 22 at the upper side of the shaft portion 21 so as not to be rotatable in the left-right direction with respect to the attachment mechanism 25. Similarly to the upper bush 80 illustrated in FIG. 8B, the upper bush 130 has cable insertion holes 131, 132, and 133 and a fixing portion 134. The upper bush 130 is inserted into the inside of the uppermost end portion of the shaft portion 21 so as to be rotatable with respect to the shaft portion 21. As illustrated in FIG. 9B, the upper bush 130 is fixed to the upper case portion 123 by fixing the fixing portion 134 to the upper case portion 123 using a fixing member such as a bolt. The power cable 125 is inserted into the cable insertion hole 131, the power cable 126 is inserted into the cable insertion hole 132, and the internal signal cable 76 is inserted into the cable insertion hole 133. The upper bush 130 is formed of a material having a strength higher than that of the upper bush 80 illustrated in FIG. 8B so that the portion of the power cable 125 positioned above the opening portion 22 from the inside of the opening portion 22 at the upper side of the shaft portion 21 and the portion of the power cable 126 positioned above the opening portion 22 from the inside of the opening portion 22 at the upper side of the shaft portion 21 can be firmly supported so as not to be rotatable with respect to the attachment mechanism 25. The fixing portion 134 of the upper bush 130 is thicker than the fixing portion 84 of the upper bush 80. Similarly to the upper bush 80, the upper bush 130 has a function of positioning the power cables 125 and 126 and the internal signal cable 76 such that the upper end portions of the power cables 125 and 126 and the internal signal cable 76 are separated from each other in the direction orthogonal to the extension direction of the axis of the shaft portion 21. The upper bush 130 is a specific example of the "cable support portion" and the "cable positioning member".

In the outboard motor 121 according to the second embodiment of the present disclosure having such a configuration, when the shaft portion 21 and the propulsion device are rotated in the left-right direction by the driving of the steering device 50, the portion of each of the power cables 125 and 126 from the portion positioned inside the opening portion 22 at the upper side of the shaft portion 21 to the lower end portion is displaced so as to be twisted substantially about the axis of the shaft portion 21. However, even when the shaft portion 21 and the propulsion device are rotated in the left-right direction by the driving of the steering device 50, the portion of each of the power cables 125 and 126 from the front end portion connected to the battery provided in the ship to a portion thereof positioned above the opening portion 22 at the upper side of the shaft portion 21 is not displaced. As described above, according to the outboard motor 121 of the second embodiment of the present disclosure, when the propulsion device rotates in the left-right direction with respect to the ship, the cables 125 and 126 connected to the propulsion device are prevented from being displaced in conjunction with the propulsion device. Therefore, when the propulsion device rotates in the left-right direction with respect to the ship, the cables 125 and 126 connected to the propulsion device are prevented from hitting a hull or an object provided on the ship.

It should be noted that the external power cables 61 and 63 according to the first embodiment may be routed outside the shaft portion 21 so as not to be displaced with the rotation of the shaft portion 21 and the propulsion device 2, and a specific routing path of the external power cables 61 and 63 is not limited as long as the external power cables 61 and 63 are routed in this manner. The same applies to the routing of the portions of the power cables 125 and 126 according to the second embodiment drawn out from the opening portion 22 at the upper side of the shaft portion 21.

In the outboard motor 1 according to the first embodiment, the terminal connection member 69 (70) is used as the cable support portion, but instead of the terminal connection member 69 (70), another member may be used that has conductivity and is strong enough to support the rear end portion of the external power cable 61 (63) and the upper end portion of the internal power cable 62 (64) such that they are not rotatable in the left-right direction with respect to the upper case portion 37.

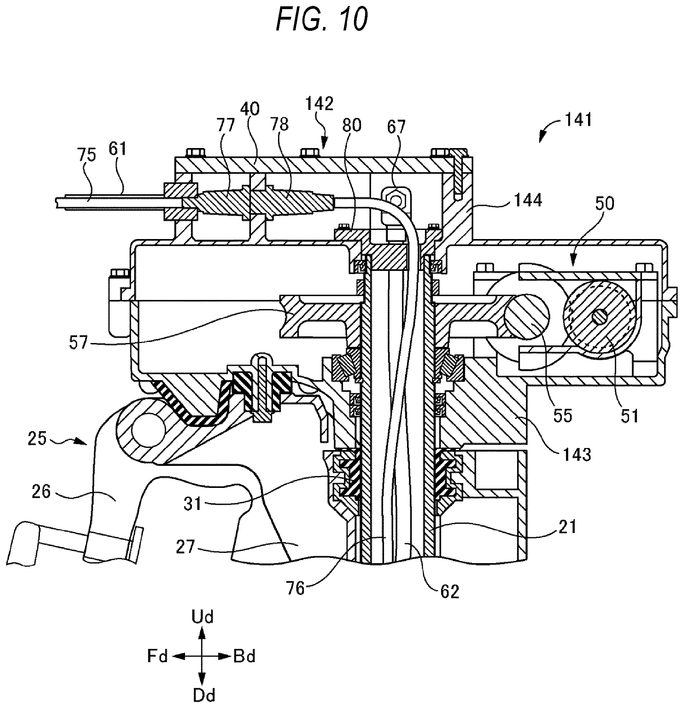

In the outboard motor 1 (121) according to each of the above embodiments, as illustrated in FIG. 4 (FIG. 9A), the turning motor 51 and the worm 55 of the steering device 50 are disposed in front of the shaft portion 21. However, in the present disclosure, the arrangement of the turning motor 51 and the worm 55 is not limited thereto. For example, as in an outboard motor 141 illustrated in FIG. 10, the shapes of the lower case portion 143 and the upper case portion 144 of the upper case 142 may be changed, and the turning motor 51 and the worm 55 may be disposed behind the shaft portion 21. According to this configuration, a new component can be added to the front portion in the upper case 142.

The foregoing description of the exemplary embodiments of the present invention has been provided for the purposes of illustration and description. It is not intended to be exhaustive or to limit the invention to the precise forms disclosed. Obviously, many modifications and variations will be apparent to practitioners skilled in the art. The embodiments were chosen and described in order to best explain the principles of the invention and its practical applications, thereby enabling others skilled in the art to understand the invention for various embodiments and with the various modifications as are suited to the particular use contemplated. It is intended that the scope of the invention be defined by the following claims and their equivalents.

## Claims

1. An outboard motor for propelling a ship, the outboard motor comprising:
a propulsion device including a propeller and a drive motor configured to rotate the propeller;
a shaft portion having a tubular shape and extending in an upper-lower direction, the propulsion device being fixed to a lower end side portion of the shaft portion;
an attachment mechanism configured to attach the shaft portion to the ship so as to be rotated about an axis of the shaft portion;
a steering device including a turning motor, configured to rotate the shaft portion by driving of the turning motor, and configured to change an orientation of the propulsion device in a left-right direction;
a cable passing through inside the shaft portion and configured to transmit electric power or an electric signal for driving the drive motor to the propulsion device, a lower end portion of the cable being fixed to the propulsion device, an upper portion of the cable being drawn out of the shaft portion from an opening portion at an upper side of the shaft portion; and
a cable support portion configured to support a part of a portion of the cable drawn out of the shaft portion from the opening portion at the upper side of the shaft portion, a portion of the cable positioned above the opening portion at the upper side of the shaft portion, or a portion of the cable positioned inside the opening portion at the upper side of the shaft portion, so as not to be rotated in the left-right direction with respect to the attachment mechanism.

2. The outboard motor according to claim 1, further comprising:
an upper case fixed to the attachment mechanism and covering an upper end side portion of the shaft portion,
wherein the cable support portion is fixed to the upper case.

3. The outboard motor according to claim 1, further comprising:
an upper case fixed to the attachment mechanism and covering an upper end side portion of the shaft portion,
wherein the cable support portion is made of a conductive material, includes a first connection portion and a second connection portion, and is fixed to the upper case such that the second connection portion is positioned above the opening portion at the upper side of the shaft portion,
the cable is divided into a first cable portion and a second cable portion,
the first cable portion is disposed outside the shaft portion, and one end portion of the first cable portion is connected to the first connection portion,
the second cable portion passes through inside the shaft portion,
a lower end portion of the second cable portion is fixed to the propulsion device, and
an upper end portion of the second cable portion is drawn out of the shaft portion from the opening portion at the upper side of the shaft portion and is connected to the second connection portion.

4. The outboard motor according to claim 3,
wherein the second connection portion includes a connection surface parallel to the axis of the shaft portion, and
an upper end portion of the second cable portion is connected to the connection surface.

5. The outboard motor according to claim 1, further comprising:
a plurality of the cables,
wherein a lower end portion or an upper end portion of the shaft portion is provided with a cable positioning member configured to position the plurality of cables such that the plurality of cables are separated from each other in a direction orthogonal to an extension direction of the axis of the shaft portion inside the shaft portion.

6. The outboard motor according to claim 1,
wherein the steering device is positioned on an upper side of the attachment mechanism, and
the cable support portion is positioned on an upper side of the steering device.

7. The outboard motor according to claim 1,
wherein the steering device includes a worm and a worm wheel configured to transmit power of the turning motor to the shaft portion, and
the worm and the worm wheel are disposed outside the shaft portion.
